(19) **Europäisches Patentamt / European Patent Office / Office européen des brevets**

(11) **EP 4 056 997 B1**

(12) **EUROPEAN PATENT SPECIFICATION**

(45) Date of publication and mention
of the grant of the patent:
**22.01.2025 Bulletin 2025/04**

(21) Application number: **20903689.6**

(22) Date of filing: **15.12.2020**

(51) International Patent Classification (IPC):
***G01N 27/83*** *(2006.01)*

(52) Cooperative Patent Classification (CPC):
**G01N 27/83**

(86) International application number:
**PCT/JP2020/046812**

(87) International publication number:
**WO 2021/125186 (24.06.2021 Gazette 2021/25)**

(54) **MAGNETIC LEAKAGE INSPECTING DEVICE, AND DEFECT INSPECTING METHOD**

VORRICHTUNG ZUR MAGNETISCHEN LECKPRÜFUNG UND DEFEKTPRÜFVERFAHREN

DISPOSITIF D'INSPECTION DE FUITE MAGNÉTIQUE ET PROCÉDÉ D'INSPECTION DE DÉFAUTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2019 JP 2019230182**

(43) Date of publication of application:
**14.09.2022 Bulletin 2022/37**

(73) Proprietor: **JFE Steel Corporation
Tokyo 100-0011 (JP)**

(72) Inventors:
• **YOKOTA, Hiroyuki
Tokyo 100-0011 (JP)**
• **YAMAGUCHI, Makoto
Tokyo 100-0011 (JP)**

(74) Representative: **Haseltine Lake Kempner LLP
Bürkleinstrasse 10
80538 München (DE)**

(56) References cited:
CN-A- 103 018 320    CN-A- 103 018 320
JP-A- 2003 215 106    JP-A- 2003 215 106
JP-A- 2004 037 217    JP-A- 2011 123 081
JP-A- 2011 123 081    JP-A- S52 149 134

**Description**

Technical Field

The present invention relates to a magnetic leakage inspection device for detecting a magnetic flux leakage of a magnetic flux passing through an inside of an inspection object to detect a defect or the like of the object, and to a defect inspection method.

Background Art

A magnetic leakage inspection device which uses a change in a magnetic flux leakage is known (see, for example, Patent Literature 1) as a device in a manufacture line of a soft magnetic steel sheet (strip) such as a tin steel sheet for a beverage can or an automobile steel sheet, for inspecting, on-line and in a non-destructive manner, a defect that exists on a surface or in an inside of the steel sheet. When a substance other than a soft magnetic material is contained in a steel sheet and exists as a defect, the defect hinders the flow of the magnetic flux passing through the steel sheet in a magnetic saturation state, to cause a magnetic flux leakage from a surface of the steel sheet. Thereby, the magnetic leakage inspection device can detect the magnetic flux leakage to determine a defect. The inspection object steel sheet is a steel sheet (strip) having a thickness of approximately 0.2 mm for a beverage can, or a steel sheet (strip) having a thickness of approximately 0.8 mm for an automobile steel sheet.

Such a magnetic leakage inspection device includes an exciter (magnetizer) for saturating a magnetic flux of an inspection portion of an inspection object steel sheet (strip), and a magnetic detector for detecting lines of magnetic force that leak from a magnetized saturated portion. The inside of the inspection object steel sheet is caused to have a saturation magnetic flux density equivalent to substantially 1.7 T (tesla) by using a direct-current magnetic field. A coil element or a hole element, for example, is used as the magnetic detector for detecting a defect (see, for example, Patent Literature 2).

The exciter is a device configured to generate a saturated direct-current magnetic field (magnetic flux) in an inspection object steel sheet, and, in Patent Literature 1 above, an exciter having a gate-shaped iron core (excitation yoke) and a coil wound around the iron core is used as the exciter, to have a structure in which an opening of the iron core is provided with a magnetic generator. Such an exciter functions as an electromagnet by causing a direct current to flow through the coil. As the exciter, an exciter that uses permanent magnets is also known (see, for example, Patent Literature 3).

When a defect inspection using such a magnetic leakage inspection device is performed while magnetizing an inspection object steel sheet (strip) in a width direction thereof (sometimes referred to as a C-direction magnetization), it is preferable to widen the opening of the excitation yoke so as to reduce the number of exciters that are installed in the width direction to reduce equipment cost. In such a case, even if a strong magnetic flux is applied to pass through an inspection object steel sheet to cause a magnetic flux close to magnetic saturation (equivalent to 1.7 T) in the steel sheet, the magnetic flux density at the center of an inspection portion (the center of the opening of the yoke) tends to be lower than the magnetic flux density at end portions of the yoke. Therefore, in order to achieve a state that the magnetic flux density at the center of the inspection portion is approximately 1.7 T, the magnetic flux density near the ends of the excitation yoke needs to be further increased.

On the other hand, a technique for performing excitation from an opposite surface of an inspection object steel sheet to cause a magnetic flux inside the steel sheet to flow as uniformly as possible is proposed (see Non Patent Literature 1).

In addition, in order to suppress a stray magnetic field near the ends of an excitation yoke and reduce a magnetic flux near ends of the excitation yoke, a device that has a ferromagnetic sheet installed at the center of an opening of the excitation yoke (see Patent Literature 4), and a device that has a sub-excitation yoke disposed in addition to a main excitation yoke (Patent Literature 5), are proposed.

Patent Literature 6 discloses a magnetic flaw detector in which magnetic sensitive elements are provided between a C-shaped outer soft magnetic body in which an opening is provided at the position facing an inspection object strip, and a T-shaped inner soft magnetic body in which a tip of the inner soft magnetic body is provided in the opening of the outer soft magnetic body to face the inspection object strip.

Citation List

Patent Literature

PTL 1: Japanese Unexamined Patent Application Publication No. 56-61645
PTL 2: Japanese Unexamined Patent Application Publication No. 2002-195984
PTL 3: Japanese Unexamined Patent Application Publication No. 2002-156363
PTL 4: Japanese Unexamined Patent Application Publication No. 8-15227
PTL 5: Japanese Unexamined Patent Application Publication No. 7-22240
PTL 6: Japanese Unexamined Patent Application Publication No. 2003 215106

Non Patent Literature

NPL 1: Yoshiaki Matsuoka and two others, "Development of Non-Metallic Inclusion Detection System by Magnetic Leakage Flux Method (measurement/control special edition)", Ironmaking Research, Nippon Steel Corporation, October 1990, No. 339, p. 57-62)

Summary of Invention

Technical Problem

In the technique of Non Patent Literature 1, a stray magnetic field suppression device having approximately the same magnetizing force as a primary excitation yoke needs to be installed also on a side opposite to an inspection object steel sheet, to increase equipment cost and to require a wider installation space.

In the technique of Patent Literature 5, although excitation devices need to be disposed only at one surface of an inspection object steel sheet, one inspection portion requires a plurality of excitation devices, to increase equipment cost.

In the technique of Patent Literature 4, since a ferromagnetic sheet material needs to be placed only at the opening of the excitation yoke, the device structure can be simplified. However, the ferromagnetic sheet material needs to be held to be separated by a certain distance from an inspection object steel sheet and the excitation yoke, and in what way the ferromagnetic sheet material is held at a space is not described, and its feasibility is uncertain. In addition, since a reduction in the magnetic flux density near a central portion of the opening of the excitation yoke inevitably occurs, a strong exciter is required, to increase a total equipment cost.

Therefore, an object of the present invention is to provide a magnetic leakage inspection device which can generate, even when an opening of a yoke is wide, a uniform magnetic flux in an inspection portion corresponding to the opening of the yoke without installing an additional means for generating a strong magnetic force, and a defect inspection method that uses the magnetic leakage inspection device.

Solution to Problem

As a solution to the above problems, the present invention is defined by independent claims 1 and 5.

(1) A magnetic leakage inspection device comprises an exciter having a yoke and magnetic generating means configured to generate a direct-current magnetic field to magnetize the yoke, the yoke having a pair of leg portions and an opening between the pair of leg portions, the pair of leg portions each being disposed at a portion opposed to an inspection object and each forming a magnetic pole; and a magnetic detector disposed in the opening of the yoke. The magnetic leakage inspection device is such that a size L of the opening of the yoke is in a range of 40 to 600 mm, and further comprises guide plates made of a soft magnetic material, each of the guide plates being provided to protrude toward a center of the opening from a corresponding one of the pair of leg portions of the yoke so as to oppose each other, wherein distances H are defined by the distances between each guide plate (6) that protrudes from its corresponding one of the leg portions (4a) of the yoke(4) and the ends of the respective leg portions (4a), each distance H and the size L of the opening satisfy a relation: $0.05 \leq H/L \leq 0.4$.

(2) In the magnetic leakage inspection device according to (1) above, the guide plates are provided parallel to a direction of magnetization of the inspection object by the exciter.

(3) In the magnetic leakage inspection device according to (1) or (2) above, a protrusion amount W of each guide plate and the size L of the opening satisfy a relation below.

$$0.1 \leq W/L \leq 0.4.$$

(4) In the magnetic leakage inspection device according to any one of (1) to (3) above, the magnetic generating means is a coil that, together with the yoke, constitutes an electromagnet by being wound around the yoke and being supplied with a direct current, or the magnetic generating means is a permanent magnet disposed in the yoke.

(5) A defect inspection method, by using the magnetic leakage inspection device according to any one of (1) to (4) above, magnetizes a strip that is the inspection object in a direction orthogonal to a travel direction thereof and inspects a defect of the strip.

(6) In the defect inspection method according (5) above, a plurality of the magnetic leakage inspection devices are disposed in a width direction of the strip.

Advantageous Effects of Invention

According to the present invention, since guide plates made of a soft magnetic material are provided to protrude toward the center of the opening from a corresponding one of the pair of leg portions of the yoke so as to oppose each other, part of the magnetic flux of each leg portion passes through a corresponding one of the guide plates and is guided toward the center of the opening. Therefore, the magnetic flux density near the center of the opening can be increased, and, even when the opening of the yoke where the magnetic detector is provided is wide, the magnetic flux density at an inspection portion of an inspection object that is positioned at the opening of the yoke can be made uniform without installing an additional means for generating a strong magnetic force.

Brief Description of Drawings

[Fig. 1] Fig. 1 is a sectional view showing a general structure of a magnetic leakage inspection device according to a first embodiment of the present invention.

[Fig. 2] Fig. 2 is a sectional view showing a general structure of a magnetic leakage inspection device according to a second embodiment of the present invention.

[Fig. 3] Fig. 3 is a plan view showing an example of an arrangement of magnetic leakage inspection devices.

[Fig. 4] Fig. 4 is a graph showing a magnetic flux density distribution at an inspection portion of a strip that is an inspection object when a size of opening is 120 mm in a conventional magnetic leakage inspection device.

[Fig. 5] Fig. 5 shows a flow of a magnetic flux when a guide plate has been provided in accordance with the present invention.

[Fig. 6] Fig. 6 shows a magnetic flux (lines of magnetic force) distribution in a magnetic leakage inspection device according to an example in which guide plates have been provided.

[Fig. 7] Fig. 7 shows a magnetic flux density distribution of the magnetic leakage inspection device according to the example in which guide plates have been provided.

[Fig. 8] Fig. 8 is a graph showing magnetic flux density distributions of inspection portions of strips of magnetic leakage inspection devices when a plate thickness of each guide plate is 1 mm, when a plate thickness of each guide plate is 2 mm, and when guide plates are not provided.

[Fig. 9] Fig. 9(a) shows an example of a magnetic leakage inspection device having the structure shown in Fig. 2, and Fig. 9(b) shows magnetic generating means of the magnetic leakage inspection device shown in Fig. 9(a).

[Fig. 10] Fig. 10 shows a magnetic flux density distribution applied to a steel strip.

[Fig. 11] Fig. 11 is a graph showing a magnetic flux density distribution in a central portion at an opening of a yoke in a depth direction.

Description of Embodiments

Embodiments of the present invention are described below with reference to the attached drawings.

<First Embodiment>

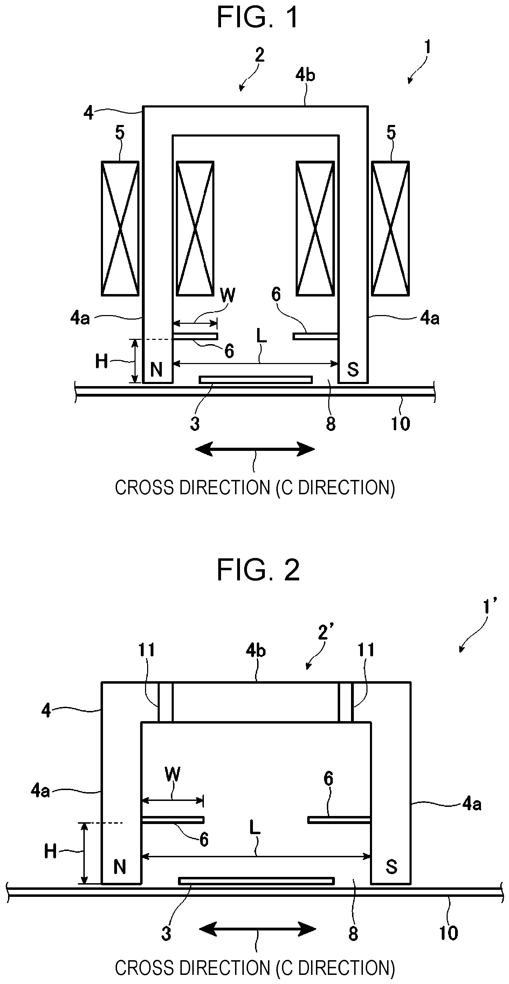

Fig. 1 is a sectional view showing a general structure of a magnetic leakage inspection device according to a first embodiment of the present invention.

[Overall Structure]

As shown in Fig. 1, a magnetic leakage inspection device 1 according to the first embodiment is a device for detecting a defect of an inspection object strip (steel sheet) 10 that is transported, and has an exciter 2, a magnetic detector 3, and guide plates 6.

The exciter 2 has a yoke 4 provided to be opposed to the inspection object strip 10, and a coil 5 serving as magnetic generating means. The guide plates 6 are made of a soft magnetic material, and are each provided to protrude from a corresponding one of a pair of leg portions of the yoke 4. The yoke 4 has an opening 8 at a portion opposed to the strip 10. The magnetic detector 3 is provided in the opening 8. Here, "the exciter 2 and the strip 10 are opposed" means that an end portion of each leg portion 4a of the yoke 4 is disposed toward the inspection object strip 10 substantially perpendicularly.

[Inspection Object]

The inspection object strip 10 can be made of, for example, a soft magnetic material, such as a tin steel sheet, TFS (tin free steel), a galvanized steel sheet, or an original sheet of the galvanized steel sheet. It is preferable that the thickness thereof be in a range of 0.1 to 3.2 mm. More preferably, the thickness thereof is 0.1 to 2.0 mm. For example, the thickness is approximately 0.2 mm for a beverage can, and is approximately 0.8 mm for an automobile steel sheet.

[Magnetic Detector]

The magnetic detector 3 is a detector configured to detect a magnetic flux (lines of magnetic force) that leaks from the strip 10 in a magnetic saturation state, and can be a device in which a plurality of, for example, coil elements or hole elements are disposed.

[Exciter]

The exciter 2 has a structure in which the coil 5, serving as magnetic generating means, is wound around the yoke 4. The yoke 4 has, at portions opposing the inspection object strip 10, a pair of leg portions 4a that form magnetic poles and a linear central portion 4b that connects base end portions of the pair of leg portions 4a. The yoke 4 has a gate shape (U shape (C shape) in cross section). The pair of leg portions 4a are provided with the opening 8 between their end portions, and ends of the respective leg portions 4a that form magnetic poles are provided near the strip 10. Here, it is preferable that the leg portions 4a be disposed perpendicularly to the inspection object strip 10. In addition, it is preferable that the distance between the strip 10 and the end portion of one of the pair of leg portions 4a and the distance between the strip 10 and the end portion of the other leg portion 4a be the same.

The coil 5 generates a direct-current magnetic field by being supplied with a direct current and magnetizes the yoke 4. That is, the coil 5 constitutes, together with the yoke 4, an electromagnet by being supplied with a direct current. By increasing the number of windings of the coil 5 × electric current, a strong electromagnet is formed, and a magnetic flux is supplied to an inspection portion of the strip 10 via the yoke 4 and the magnetic flux density at the inspection portion is caused to be a saturated magnetic flux density that is greater than or equal to 1.7 T. For one leg portion 4a, the number of windings of the coil 5 is approximately 400 to 1000 and the electric current is preferably approximately 2 to 9 A. When the yoke 4 has been magnetized, magnetic poles are formed at the ends of the pair of leg portions 4a, and the end of one of the leg portions 4a becomes a N pole and the end portion of the other leg portion 4a becomes a S pole.

The material of the yoke 4 only needs to be a soft magnetic material. Practically speaking, considering economic efficiency, it is preferable to use a steel material such as SS400. The yoke 4 needs to have a thickness (thicknesses of the leg portions 4a and the central portion 4b of the yoke 4 in the cross section shown in Fig. 1) that does not resist the passage of a required magnetic flux. In the present embodiment, it is preferable that the thickness be 10 to 20 mm. When the thickness is increased more than is necessary, the weight is increased. The length of each leg portion 4a of the yoke 4 can be selected as appropriate in accordance with the number of windings of the coil 5, and is approximately 150 to 250 mm.

Note that the length of the exciter in a depth direction (the length in a direction perpendicular to the sheet plane of Fig. 1) can be set to any length in accordance with the size of an inspection object. For example, in a C-direction magnetization in which the strip 10 is magnetized in a width direction, the length of the exciter in the depth direction only needs to be approximately 40 to 100 mm. This is because, when the length of the exciter in the depth direction is less than 40 mm, an inspection object cannot be brought into a uniform magnetic saturation state, and detection accuracy is reduced. In addition, this is because, when the length of the exciter in the depth direction is greater than 100 mm, excitation energy that is greater than or equal to that required for detecting a defect is required.

In the present embodiment, it is preferable that the exciter 2 perform excitation in a cross direction (C direction, sheet width direction) orthogonal to a travel direction of the inspection object strip 10. Since, by excitation in the cross direction with respect to a long defect occurring in the strip 10 in a flow direction (travel direction), a magnetic flux leakage from the defect increases, the excitation in the cross direction is effective. Here, it is preferable that the angle formed by an excitation direction and the travel direction of the strip 10 be in a range of 80 to 90 degrees.

When a cross-direction excitation is performed, in order to reduce equipment cost by reducing the number of exciters 2 that are disposed in the sheet width direction, namely in the cross direction, it is preferable that the opening 8 of the excitation yoke 4 be wide. From such a viewpoint, in the present embodiment, a size L of the opening 8 is 40 to 600 mm. When the size L of the opening 8 is less than 40 mm, the effect of reducing equipment cost by reducing the number of exciters 2 that are disposed in the sheet width direction is insufficient. Increasing the size L of the opening 8 is desirable from the point that a wide sheet width range can be covered by one magnetic leakage inspection device. However, increasing the size L of the opening 8 reduces a magnetic flux that is supplied to the strip 10, and thus, when the size L is greater than 600 mm, the sensitivity of detecting a defect is reduced. From the viewpoint of ensuring a sufficient magnetic flux, it is preferable that the size L of the opening 8 be less than or equal to 300 mm. Further, since, when the size L of the opening 8 increases, the weight of one magnetic leakage inspection device is increased and an accompanying device that holds the magnetic leakage inspection device is also increased in size, it is more preferable that the size L of the opening be less than or equal to 200 mm. A more preferable range of the size L is 100 to 150 mm. When a strip having a wide sheet width is inspected, it is preferable that a plurality of magnetic leakage inspection devices 1 be installed in the sheet width direction and the entire sheet width be covered.

[Guide Plates]

The guide plates 6 are provided to protrude toward the center of the opening 8 from a corresponding one of the pair of leg portions 4a of the yoke 4 so as to oppose each other. Here, "the guide plates protrude so as to oppose each other" means that the guide plate installed on one of the leg portions of the yoke protrudes toward the other leg portion, and that the guide plate installed on the other leg portion of the yoke also protrudes toward the one of the leg portions. Each guide plate 6 has the function of guiding a magnetic flux of a corresponding one of the leg portions 4a of the yoke 4 toward the center of the opening 8.
Therefore, it is possible to reduce the magnetic flux densities of end portions of the opening 8, increase the magnetic flux density at a central portion, and bring the magnetic flux density at an inspection portion of the strip 10 into a uniform state.

The material of each guide plate 6 only needs to be a soft magnetic material. Practically speaking, considering economic efficiency, it is preferable to use a steel material such as SS400. It is preferable that each guide plate 6 be provided parallel to a direction of magnetization of the strip 10 by the exciter 2. In addition, it is preferable that the pair of guide plates 6 be disposed in substantially the same plane. Note that an end portion of each guide plate 6 on the yoke-4 side is connected to a corresponding one of the leg portions 4a in close contact therewith. The connection method may be, in addition to a method, such as welding, brazing, or press-contacting, a method, such as screwing, crimping, or press-fitting. A member integrated with each leg portion 4a of the yoke 4 may be formed by cutting away by machining or may be formed by additive manufacturing.

It is preferable that the guide plates 6 be such that a protrusion amount W thereof and the size L of the opening satisfy the relation of $0.1 \leq W/L \leq 0.4$. This is because, when W/L is less than 0.1, the effect of guiding a magnetic flux toward the center of the opening 8 is reduced, and, when W/L is greater than 0.4, the magnetic flux density near each end portion of the opening 8 may be reduced more than is necessary. More preferably, W/L is 0.15 to 0.30. This is because, the magnetic flux density at the opening 8 can be made more uniform.

When the distances of positions, where the guide plates 6 protrude from the corresponding one of the leg portions 4a of the yoke 4, from the ends of the leg portions 4a are H, it is preferable that each distance H and the size L of the opening 8 satisfy the relation of $0.05 \leq H/L \leq 0.4$. This is because, when H/L is less than 0.05, the magnetic detector 3 and an end portion of each guide plate 6 approach each other and, thus, due to vibration of a device, each guide plate 6 may approach the magnetic detector 3 and the uniformity of the magnetic flux density may be reduced; and, when H/L is greater than 0.4, the distance between each guide plate 6 and the strip (steel sheet) 10 increases and, thus, the effect of guiding a magnetic flux toward the center of the opening 8 is reduced. More preferably, H/L is $0.1 \leq H/L \leq 0.3$.

Note that it is preferable that the guide plates 6 be symmetrically disposed when seen from the center of the opening 8.

Although the shape of each guide plate 6 is typically a rectangular shape, the shape is not limited thereto, and may be another shape, such as a trapezoidal shape or a fan shape. It is desirable that the plate thickness of each guide plate 6 be approximately 1 to 3 mm. This is because, when the plate thickness of each guide plate 6 is less than 1 mm, the rigidity is reduced and the strength is insufficient. When the plate thickness is too large, the weight of the inspection device is increased. Practically speaking, it is desirable that the plate thickness be approximately 2 mm. Further, the plate thickness of each guide plate 6 need not be uniform, and, for example, guide plates whose yoke 4 side is thick and that become thinner as they protrude toward an inner side may also be used.

[Magnetic Flux Density, Etc.]

In a magnetic leakage system, the magnetic flux density at an inspection portion of the strip 10 is made substantially 1.7 T or greater and the inspection portion is brought into a magnetic flux saturation state or a state near the magnetic flux saturation state by causing a strong magnetic flux to pass through the inspection portion by using a direct-current magnetic field from the exciter 2. Gaps each between the strip 10 and an end (N pole or S pole) of a corresponding one of the leg portions 4a are set in a range of substantially 0.5 to 7 mm.

<Second Embodiment>

Fig. 2 is a sectional view showing a general structure of a magnetic leakage inspection device according to a second embodiment of the present invention.

[Overall Structure]

As shown in Fig. 2, a magnetic leakage inspection device 1' according to the second embodiment is a device for detecting a defect of a strip (steel sheet) 10 that is an inspection object and that is transported, and has an exciter 2', a magnetic detector 3, and guide plates 6.

The exciter 2' has a yoke 4 disposed to be opposed to the inspection object strip 10, and permanent magnets 11 serving as magnetic generating means.

Although the present embodiment differs from the first embodiment in that the exciter 2' is provided with permanent magnets as magnetic generating means, the other structures of the exciter **2'** are substantially the same as those of the exciter 2 of the first embodiment. The structures of the magnetic detector 3 and the guide plates 6 are also the same as those of the first embodiment.

[Exciter]

The exciter 2' has a structure in which the permanent magnets 11 are disposed in a central portion 4b of the yoke 4. As each permanent magnet 11, a magnet having a magnetic force that can bring an inspection portion of the inspection object strip 10 into a magnetic flux saturation state is selected. As such a magnet, any permanent magnet, such as a neodymium magnet, a samarium-cobalt magnet, a ferrite magnet, or an alnico magnet, can be used. In particular, a neodymium magnet having a strong magnetic force is suited. Although the number of permanent magnets 11 may be one, since a neodymium magnet sometimes cannot be made large, in this case, for example, a measure, such as increasing the magnet thickness to a size that allows an equivalent magnetic flux to be obtained (disposing a plurality of magnets so as to be superimposed upon each other in a magnetic flux direction), may be taken, and the magnets may be optimally disposed in a separated manner. As shown in Fig. 2, two magnets may each be disposed in a separated manner toward a corresponding one of a pair of leg portions 4a. In this case, it is desirable that the permanent magnets 11 be symmetrically disposed on the left and right. By providing two permanent magnets 11 in a separated manner in this way, the magnetic flux density can be made more uniform. The strength of the permanent magnets 11 can be adjusted by the thickness thereof (which is the length of the central portion 4b in a lateral direction in Fig. 2; the "thickness" of each permanent magnet refers to the length in a direction of flow of a magnetic flux).

In the present embodiment, the point that the permanent magnets 11 are disposed in the central portion 4b of the yoke 4 differs from the yoke 4 of the first embodiment that is configured as a continuous body. However, the function of the yoke of this embodiment is the same as that of the first embodiment. In the present embodiment, the permanent magnets 11 and the yoke 4 are integrated with each other and constitute the exciter 2', and the entire exciter 2' has a gate shape ((U shape (C shape) in cross section).

The yoke 4 requires a thickness (the "thickness" of the yoke is a thickness in a direction perpendicular to a direction of flow of a magnetic flux in members of the leg portions 4a and the central portion 4b of the yoke 4 in the cross section shown in Fig. 2) that does not resist the passage of a required magnetic flux, and, in the embodiment, is preferably 10 to 20 mm. The excessive thickness more than necessary increases the weight.

In the exciter 2 of an electromagnet type in the first embodiment, as the coil 5 serving as magnetic generating means, a large coil is required; and the leg portions 4a of the yoke 4 for winding the coil 5 therearound need to be long. However, since the exciter 2' of the present embodiment uses the permanent magnets 11 as magnetic generating means, a coil is not required. Therefore, compared with the magnetic leakage inspection device 1 of the first embodiment, the magnetic leakage inspection device 1' of the present embodiment is lighter corresponding to the absence of a coil and has leg portions 4a of the yoke 4 whose lengths are small and thus can be reduced in size. For example, the length of each leg portion 4a can be approximately 50 to 100 mm.

Note that in the case where permanent magnets are used as magnetic generating means as in the present embodiment, when a magnetic flux to an inspection object is to be turned off, a sub-exciter having a sub-permanent magnet may be provided. As the sub-exciter, a sub-exciter having a sub-permanent magnet that is easily reversed, such as an alnico magnet, a yoke connected thereto, and an electromagnet coil wound around the sub-permanent magnet is used, and the yoke of the sub-exciter is connected to the sub-exciter **2'** so as to be disposed on respective sides of the permanent magnets 11. The magnetic poles of the sub-permanent magnet are each oriented in a direction in which a magnetic flux is supplied to a corresponding one of the leg portions 4a of the yoke 4 of the exciter 2' at the time of inspection. When, from this state, a direct current is caused to flow through the electromagnet coil and the magnetic poles of the sub-permanent magnet are reversed, it is possible to suck up a magnetic flux of the exciter into the sub-exciter and to turn off a magnetic flux that is supplied from the exciter 2' to the strip 10.

<Defect Inspection Method>

A defect inspection method of the first embodiment and a defect inspection method of the second embodiment are each a method that, by using the magnetic leakage inspection device 1 or 1' described above, inspects a defect of an inspection object strip 10 by magnetizing the strip 10 in a direction orthogonal to the travel direction of the strip 10.

<Inspection Method by Magnetic Leakage Inspection Device, and Operation/Effects>

In the magnetic leakage inspection device 1 of the first embodiment or the magnetic leakage inspection device 1' of the second embodiment, the inspection object strip 10 and that is transported is excited (magnetized) by the exciter 2 or the exciter 2' to inspect a defect. Specifically, the magnetic generating means (the coil 5 or the permanent magnets 11) generates a direct current magnetic field, magnetizes the yoke 4, and causes a strong magnetic flux to pass from the yoke 4 through an inspection portion of the inspection object strip 10 (a portion of the strip 10 that is positioned at the opening of the yoke 4) and that is transported. Therefore, the inspection portion of the strip 10 is caused to have a magnetic flux density of substantially 1.7 T or greater, and is brought into a magnetic flux saturation state or a state near the magnetic flux saturation state. Then, any magnetic flux leakage from the inspection portion is detected by the magnetic detector 3 to inspect a defect.

In inspecting a defect, a method of magnetizing the strip 10 in the cross section (C direction, sheet width direction) orthogonal to the travel direction of the strip 10 is used. This is to improve the sensitivity of detecting a long defect occurring in the flow direction (travel direction) of the strip 10.

When a cross-direction excitation is to be performed, in order to reduce equipment cost by reducing the number of exciters 2 or the number of exciters 2' that are disposed in the sheet width direction, namely in the cross direction, it is preferable to widen the opening 8 of the excitation yoke 4; and, from such a viewpoint, as described above, the size L of the opening 8 is made wide at 40 to 600 mm.
Preferably, the size L is 100 to 150 mm.

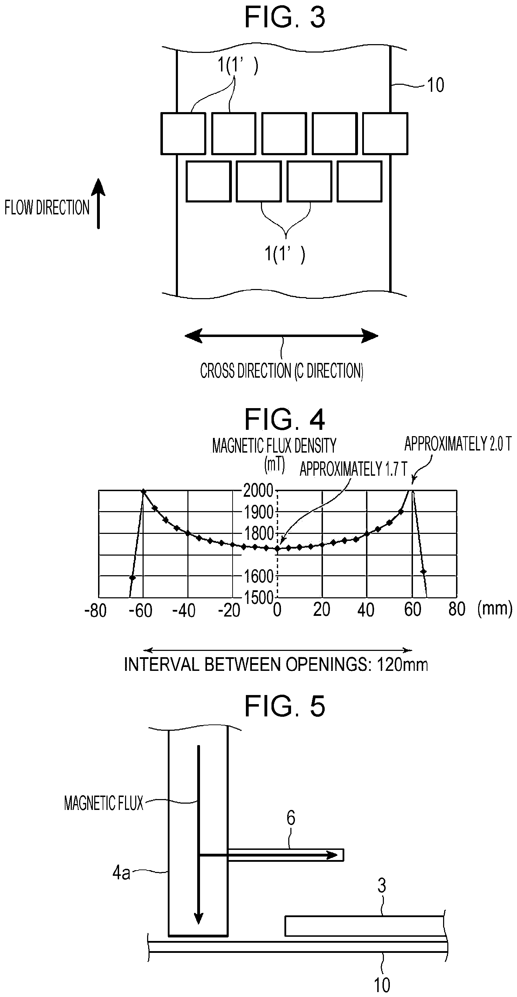

When a cross-direction excitation is to be performed, as shown in Fig. 3, a plurality of magnetic leakage inspection devices 1 (1') whose openings 8 having a wide size L are aligned in the sheet width direction of the strip 10 are disposed side by side in the sheet width direction. Here, as illustrated, it is preferable that the magnetic leakage inspection devices be arranged in two rows in a staggered manner so as to allow inspection entirely in the sheet width direction (C direction).

When the size L of the opening 8 is widened in this way, in a conventional magnetic leakage inspection device, a magnetic flux at the center of an inspection portion (center of the opening of a yoke) is insufficient and the magnetic flux of the inspection portion tends to be ununiform. For example, the magnetic flux density distribution of the opening when the size L of the opening 8 is 120 mm is as shown in Fig. 4. Fig. 4 shows that the magnetic flux density near the end portions of the opening is higher than the magnetic flux density at the center of the opening 8. That is, when the magnetic flux density in the strip 10 at the center of the opening 8 is to be approximately 1.7 T, it may be necessary to set the magnetic flux density of the strip 10 near the ends of the yoke at a very high value of 2.0 T. Therefore, when a coil 5 serving as magnetic generating means is used as in the first embodiment, a large coil is required, and, when permanent magnets 11 are used as in the second embodiment, stronger magnets are required.

Therefore, in the present embodiment, guide plates 6 that protrude toward the center of the opening 8 from a corresponding one of the pair of leg portions 4a of the yoke 4 so as to oppose each other are provided. Therefore, as shown in Fig. 5, part of a magnetic flux that flows in each leg portion 4a of the yoke 4 passes through a corresponding one of the guide plates 6 and is guided toward the center of the opening 8. Consequently, the magnetic flux density near the ends of the leg portions of the yoke is reduced and the magnetic flux density near the center of the opening is increased. Thus, even when the opening 8 is wide, it is possible to cause the magnetic flux density at an inspection portion of the strip 10 which exists to be opposed to the exciter 2 or 2' to become uniform at a magnetic flux density of substantially 1.7 T or greater without installing an additional means of a related art that generates a strong magnetic force.

Therefore, it is possible to reduce the size and the magnetization of the magnetic generating means without the necessity of setting the magnetic flux density at the ends of the leg portions of the yoke to a very high value (in the example shown in Fig. 4, 2.0 T) as it has been conventionally necessary. In particular, when permanent magnets are used as magnetic generating means, synergistic effects between size reduction due to the permanent magnets and size reduction due to the use of guide plates can reduce the size of the magnetic leakage inspection device compared with conventional magnetic leakage inspection devices.

<Other Applications>

Although embodiments of the present invention have been described above, the embodiments are merely exemplifications and are not restrictive, and may be omitted, replaced, or changed in various forms without departing from the spirit of the present invention.

For example, an inspection object is not limited to a strip and thus any object may be applied as long as the object is a thin soft magnetic material. The structure of an exciter is not limited to the structures shown in Figs. 1 and 2.

EXAMPLE 1

Here, a magnetic leakage inspection device having the structure shown in Fig. 2 was used, the size of an opening between leg portions of a yoke being 120 mm, permanent magnets being used as magnetic generating means, and guide plates having a thickness of 2 mm and a length of 30 mm each being provided at a location that is 20 mm from an end of a corresponding one of the leg portions of the yoke. The guide plates were placed so as to be separated from the permanent magnets by 25 mm or greater. The size of a gap between the end of one leg portion of the yoke and a inspection object strip and the size of a gap between the end of the other leg portion of the yoke and the strip were 3 mm.

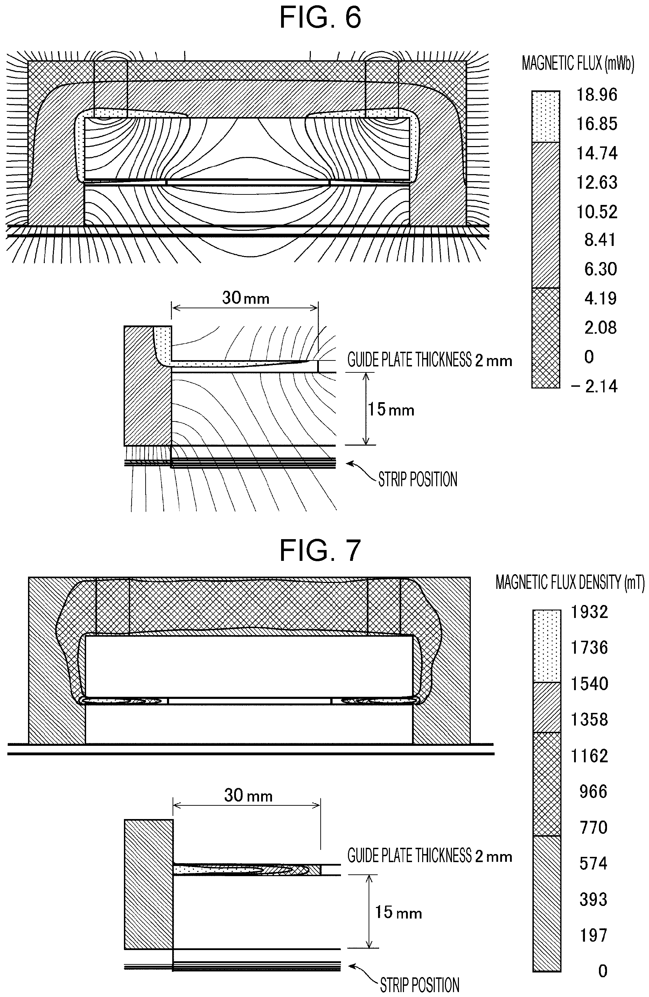

The magnetic flux (lines of magnetic force) distribution at this time is shown in Fig. 6, and the magnetic flux density distribution is shown in Fig. 7. These figures monochromatically show original colored figures, and based on these figures, it is confirmed that the magnetic flux flows from each leg portion of the yoke to a corresponding one of the guide plates and is saturated at a mounting portion of the corresponding one of the guide plates. Saturation of the magnetic flux at other yoke portions is not seen. Therefore, it is understood that each guide plate is guiding the magnetic flux to the center of the opening.

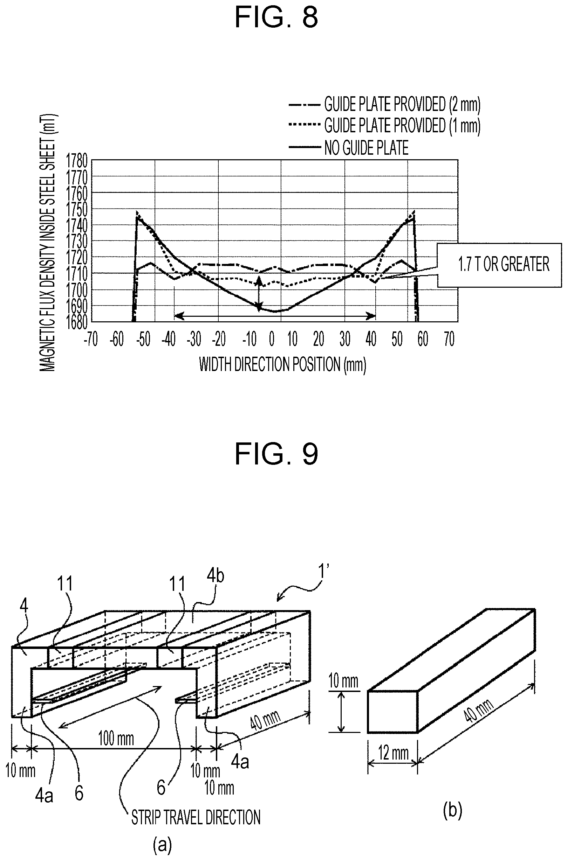

Next, regarding the magnetic leakage inspection device having the above-described structure and whose guide plates had a plate thickness of 2 mm, a magnetic leakage inspection device having the same structure except that the plate thickness of each guide plate was 1 mm, and a magnetic leakage inspection device having the same structure except that guide plates were not provided, the magnetic flux densities at inspection portions of strips were measured. Fig. 8 shows the magnetic flux density distributions thereof. As shown in Fig. 8, it was confirmed that, when guide plates were not provided, the magnetic flux density at the center of the inspection portion corresponding to the center of the opening tended to be reduced, and was less than 1.7 T, whereas, when guide plates were provided, the magnetic flux density at the center of the inspection portion was increased and was greater than 1.7 T, and the uniformity of the magnetic flux density increased. It was seen that the effect of increasing the magnetic flux density at the center was higher when the plate thickness of each guide member was 2 mm than when the plate thickness of each guide member was 1 mm, and that the magnetic flux density increased by approximately 10 mT. In addition, it is seen that, when the plate thickness of each guide plate is 2 mm, the magnetic flux density at portions near the yoke notably decreased. From the above, it was confirmed that, when the plate thickness of each guide plate was 2 mm, the uniformity of the magnetic flux density at the inspection portion of the strip was very high.

It was confirmed that, in this way, by providing guide plates, the magnetic flux density at the inspection portion corresponding to the opening of the yoke could be made uniform, for example, without installing an additional means for generating a strong magnetic force, such as another exciter on a side opposite to the inspection object.

Note that, even when the size of the opening is wider than 120 mm, this can be dealt with by designing the guide plates in accordance with the size of the opening.

EXAMPLE 2

Example 2 using the magnetic leakage inspection device 1' shown in Fig. 2 is described. In the present example, as shown in Fig. 9(a), a size L of an opening between leg portions 4a of a yoke 4 was 100 mm, and permanent magnets 11 serving as magnetic generating means were used. Guide plates 6 having a thickness of 2 mm were each provided at a location 20 mm above an end portion of a corresponding one of the leg portions 4a of the yoke 4 so as to be joined to the corresponding one of the leg portions 4a of the yoke 4. The guide plates 6 were disposed in the same plane so as to oppose each other. The protrusion amount of each guide plate 6 was 20 mm.

For the leg portions 4a of the yoke 4, a soft magnetic steel sheet having a thickness of 10 mm, a height of 65 mm, and a depth of 40 mm was used, and for a central portion 4b of the yoke 4, the same material having a thickness of 10 mm and a depth of 40 mm was used.

Permanent magnets 11 serving as magnetic generating means were neodymium magnets, and were separated in two at locations toward the respective leg portions 4a of the yoke 4 and were symmetrically disposed on the left and right at the central portion 4b of the yoke 4. As shown in Fig. 9(b), the permanent magnets 11 disposed in the yoke 4 had a thickness (length in a magnetization direction) of 12 mm on one side, and were disposed in the yoke 4 symmetrically on the left and right at the central portion 4b of the yoke 4.

The magnetic leakage inspection device 1' described above was disposed so that, with respect to a travel direction of an inspection object steel sheet, an opening direction between the leg portions 4a of the yoke 4 corresponded to an orthogonal C-direction magnetization. The inspection object steel sheet is a low carbon steel having a sheet thickness of 2.0 mm. The distance (gap) between an end of one leg portion 4a of the yoke 4 and an inspection object strip, and the distance (gap) between an end of the other leg portion 4a of the yoke 4 and the strip were 2 mm. Here, a magnetic detector (not shown in Fig. 9(a)) installed in the opening between the leg portions 4a of the yoke 4 was disposed in a range of a width of 80 mm corresponding to a central portion of the opening. The magnetic detector is a hole element.

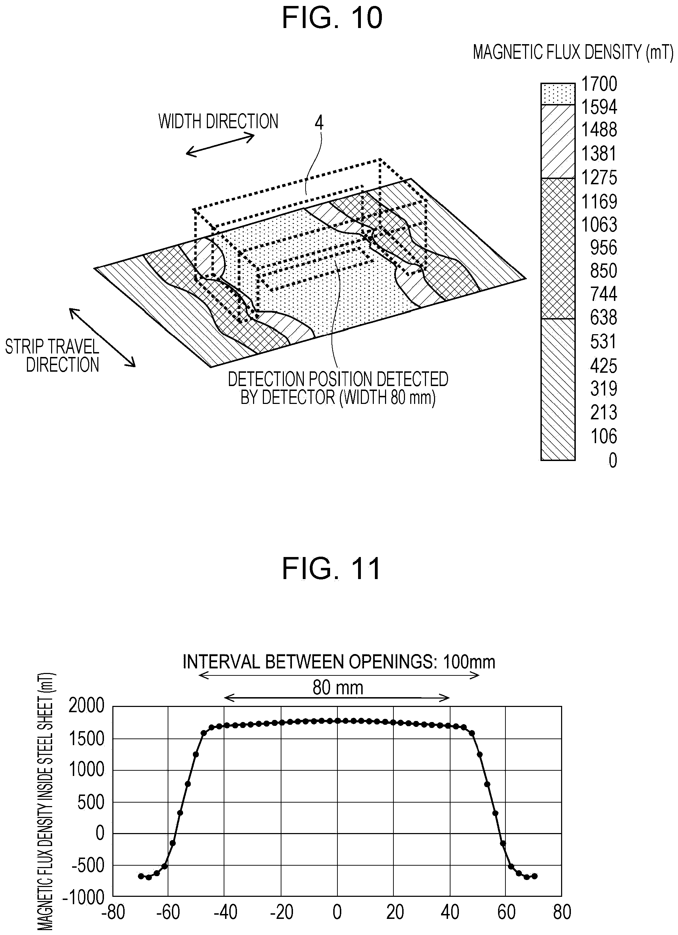

Fig. 10 shows a magnetic flux density distribution that is applied to the steel sheet (the guide plates are not shown). In the opening of the yoke, it is possible to uniformly apply 1.7 T over a wide range. Particularly, it is understood that a uniform magnetic flux density can be provided in the range of 80 mm width in which the magnetic detector is disposed. Fig. 11 shows a magnetic flux density at the central portion of the opening of the yoke in a depth direction. It is understood that the magnetic flux density is uniformly applied and a sufficient magnetic flux for detecting any magnetic flux leakage by the magnetic detector can be ensured.

Reference Signs List

1, 1' magnetic leakage inspection device
2, 2' exciter
3 magnetic detector
4 yoke
4a leg portion
4b central portion
5 coil
6 guide plate
10 strip (inspection object)
11 permanent magnet

**Claims**

1. A magnetic leakage inspection device (1, 1') comprising:

an exciter (2, 2') having a yoke (4) and magnetic generating means configured to generate a direct-current magnetic field to magnetize the yoke (4), the yoke (4) having a pair of leg portions (4a) and an opening between the pair of leg portions (4a), the pair of leg portions (4a) each being disposed at a portion opposed to an inspection object (10) and each forming a magnetic pole; and
a magnetic detector (3) disposed in the opening of the yoke (4),
wherein a size L of the opening of the yoke (4) is in a range of 40 to 600 mm, and
wherein the magnetic leakage inspection device (1, 1') further comprises guide plates (6) made of a soft magnetic material, each of the guide plates (6) being provided to protrude toward a center of the opening from a corresponding one of the pair of leg portions (4a) of the yoke (4) so that the guide plates (6) oppose each other;
**characterized in that** distances H are defined by the distances between each guide plate (6) that protrudes from its corresponding one of the leg portions (4a) of the yoke(4) and the ends of the respective leg portions (4a), each distance H and the size L of the opening satisfy a relation below:

$$0.05 \leq H/L \leq 0.4.$$

2. The magnetic leakage inspection device (1, 1') according to Claim 1, wherein the guide plates (6) are provided parallel to a direction of magnetization of the inspection object (10) by the exciter (2, 2').

3. The magnetic leakage inspection device (1, 1') according to Claim 1 or Claim 2, wherein a protrusion amount W of each guide plate (6) and the size L of the opening satisfy a relation below:

$$0.1 \leq W/L \leq 0.4.$$

4. The magnetic leakage inspection device (1, 1') according to any one of Claims 1 to 3, wherein the magnetic generating means is a coil that, together with the yoke (4), constitutes an electromagnet by being wound around the yoke (4) and being supplied with a direct current, or the magnetic generating means is a permanent magnet (11) disposed in the yoke (4).

5. A defect inspection method that, by using the magnetic leakage inspection device (1, 1') according to any one of Claims 1 to 4, magnetizes a strip (10) that is the inspection object in a direction orthogonal to a travel direction thereof and inspects a defect of the strip (10).

6. The defect inspection method according to Claim 5, wherein a plurality of the magnetic leakage inspection devices (1, 1') are disposed in a width direction of the strip (10).

**Patentansprüche**

1. Magnetleck-Inspektionsgerät (1, 1'), umfassend:

einen Erreger (2, 2') mit einem Joch (4) und einer Magneterzeugungseinheit, die so konfiguriert ist, dass sie ein Gleichstrommagnetfeld zur Magnetisierung des Jochs (4) erzeugt, wobei das Joch (4) ein Paar Schenkel (4a) und eine Öffnung zwischen diesem Paar Schenkel (4a) aufweist, wobei das Paar Schenkel (4a) jeweils gegenüber einem zu prüfenden Objekt (10) angeordnet ist und jeweils einen Magnetpol bildet; und
einen Magnetdetektor (3), der in der Öffnung des Jochs (4) angeordnet ist,
wobei eine Größe L der Öffnung des Jochs (4) im Bereich von 40 bis 600 mm liegt, und
wobei das Magnetleck-Inspektionsgerät (1, 1') ferner Führungsschienen (6) aus einem weichmagnetischen Material umfasst, wobei jede der Führungsschienen (6) so angeordnet ist, dass sie von einem entsprechenden einen des Paars Schenkel (4a) des Jochs (4) in Richtung der Mitte der Öffnung vorsteht, sodass die Führungsschienen (6) einander gegenüberliegen; **dadurch gekennzeichnet, dass** Abstände H durch die Abstände zwischen jeder Führungsschiene (6), die von ihrem jeweiligen Schenkel (4a) des Jochs (4) vorsteht, und den Enden der jeweiligen Schenkel (4a) definiert sind, wobei jeder Abstand H und die Größe L der Öffnung die folgende Beziehung erfüllen:

$$0.05 \leq H/L \leq 0.4.$$

2. Das Magnetleck-Inspektionsgerät (1, 1') nach Anspruch 1, wobei die Führungsschienen (6) parallel zur Magnetisierungsrichtung des zu prüfenden Objekts (10) durch den Erreger (2, 2') bereitgestellt werden.

3. Das Magnetleck-Inspektionsgerät (1, 1') nach Anspruch 1 oder Anspruch 2, wobei ein Vorsprungmaß W jeder Führungsschiene (6) und die Größe L der Öffnung die folgende Beziehung erfüllen:

$$0.1 \leq W/L \leq 0.4.$$

4. Das Magnetleck-Inspektionsgerät (1, 1') nach einem der Ansprüche 1 bis 3, wobei das Magneterzeugungsmittel eine Spule ist, die zusammen mit dem Joch (4) durch Umwickeln des Jochs (4) und Versorgung mit Gleichstrom einen Elektromagnet bildet, oder das Magneterzeugungsmittel ein im Joch (4) angeordneter Dauermagnet (11) ist.

5. Ein Fehlerprüfverfahren, das unter Verwendung des Magnetleck-Inspektionsgeräts (1, 1') nach einem der Ansprüche 1 bis 4 einen Streifen (10), der das Prüfobjekt ist, in einer Richtung orthogonal zu seiner Bewegungsrichtung magnetisiert und einen Fehler des Streifens (10) inspiziert.

6. Das Fehlerprüfverfahren nach Anspruch 5, wobei eine Vielzahl der Magnetleck-Inspektionsgeräte (1, 1') in Breitenrichtung des Streifens (10) angeordnet ist.

**Revendications**

1. Dispositif d'inspection de fuite magnétique (1, 1') comprenant :

un excitateur (2, 2') ayant une culasse (4) et des moyens de génération magnétique configurés pour générer un champ magnétique à courant continu pour magnétiser la culasse (4), la culasse (4) présentant une paire de parties de jambe (4a) et une ouverture entre la paire de parties de jambe (4a), la paire de parties de jambe (4a) étant chacune disposée au niveau d'une partie opposée à un objet d'inspection (10) et formant chacune un pôle magnétique ; et un détecteur magnétique (3) disposé dans l'ouverture de la culasse (4),

dans lequel une taille L de l'ouverture de la culasse (4) est comprise entre 40 et 600 mm, et dans lequel le dispositif d'inspection de fuite magnétique (1, 1') comprend également des plaques de guidage (6) constituées d'un matériau magnétique doux, chacune des plaques de guidage (6) étant prévue pour faire saillie vers un centre de l'ouverture à partir d'une partie correspondante de la paire de parties de jambe (4a) de la culasse (4) de sorte que les plaques de guidage (6) s'opposent l'une à l'autre ; **caractérisé en ce que** les distances H sont définies par les distances entre chaque plaque de guidage (6) qui dépasse de sa partie de jambe correspondante (4a) de la culasse (4) et les extrémités des parties de jambe respectives (4a), chaque distance H et la taille L de l'ouverture satisfont une relation ci-dessous :

$$0.05 \leq H/L \leq 0.4.$$

2. Dispositif d'inspection de fuite magnétique (1, 1') selon la revendication 1, dans lequel les plaques de guidage (6) sont disposées parallèlement à une direction de magnétisation de l'objet d'inspection (10) par l'excitateur (2, 2').

3. Dispositif d'inspection de fuite magnétique (1, 1') selon la revendication 1 ou la revendication 2, dans lequel une quantité de saillie W de chaque plaque de guidage (6) et la taille L de l'ouverture satisfont une relation ci-dessous :

$$0.1 \leq W/L \leq 0.4.$$

4. Dispositif d'inspection de fuite magnétique (1, 1') selon l'une quelconque des revendications 1 à 3, dans lequel le moyen de génération magnétique est une bobine qui, conjointement avec la culasse (4), constitue un électroaimant en étant enroulée autour de la culasse (4) et en étant alimentée par un courant continu, ou le moyen de génération magnétique est un aimant permanent (11) disposé dans la culasse (4).

5. Procédé d'inspection de défauts qui, en utilisant le dispositif d'inspection de fuite magnétique (1, 1') selon l'une quelconque des revendications 1 à 4, magnétise une bande (10) qui est l'objet d'inspection dans une direction orthogonale à une direction de déplacement de celle-ci et inspecte un défaut de la bande (10).

6. Procédé d'inspection de défauts selon la revendication 5, dans lequel une pluralité de dispositifs d'inspection de fuite magnétique (1, 1') sont disposés dans une direction de largeur de la bande (10).

# FIG. 1

CROSS DIRECTION (C DIRECTION)

# FIG. 2

CROSS DIRECTION (C DIRECTION)

# FIG. 3

FLOW DIRECTION

1(1')

10

1(1')

CROSS DIRECTION (C DIRECTION)

# FIG. 4

MAGNETIC FLUX DENSITY (mT)

APPROXIMATELY 1.7 T

APPROXIMATELY 2.0 T

2000
1900
1800
1700
1600
1500

-80  -60  -40  -20  0  20  40  60  80  (mm)

INTERVAL BETWEEN OPENINGS: 120mm

# FIG. 5

MAGNETIC FLUX

4a

6

3

10

# FIG. 6

30 mm

GUIDE PLATE THICKNESS 2 mm

15 mm

STRIP POSITION

MAGNETIC FLUX (mWb)

18.96
16.85
14.74
12.63
10.52
8.41
6.30
4.19
2.08
0
− 2.14

# FIG. 7

30 mm

GUIDE PLATE THICKNESS 2 mm

15 mm

STRIP POSITION

MAGNETIC FLUX DENSITY (mT)

1932
1736
1540
1358
1162
966
770
574
393
197
0

# FIG. 8

- —·— GUIDE PLATE PROVIDED (2 mm)
- ······ GUIDE PLATE PROVIDED (1 mm)
- —— NO GUIDE PLATE

1.7 T OR GREATER

MAGNETIC FLUX DENSITY INSIDE STEEL SHEET (mT)

WIDTH DIRECTION POSITION (mm)

# FIG. 9

STRIP TRAVEL DIRECTION

(a)

(b)

# FIG. 10

MAGNETIC FLUX DENSITY (mT)

WIDTH DIRECTION 4

STRIP TRAVEL DIRECTION

DETECTION POSITION DETECTED BY DETECTOR (WIDTH 80 mm)

1700
1594
1488
1381
1275
1169
1063
956
850
744
638
531
425
319
213
106
0

# FIG. 11

INTERVAL BETWEEN OPENINGS: 100mm

80 mm

MAGNETIC FLUX DENSITY INSIDE STEEL SHEET (mT)

**REFERENCES CITED IN THE DESCRIPTION**

**Patent documents cited in the description**

- JP 56061645 A
- JP 2002195984 A
- JP 2002156363 A
- JP 8015227 A
- JP 7022240 A
- JP 2003215106 A

**Non-patent literature cited in the description**

- Development of Non-Metallic Inclusion Detection System by Magnetic Leakage Flux Method (measurement/control special edition). **YOSHIAKI MATSUOKA**. Ironmaking Research. Nippon Steel Corporation, October 1990, vol. 339, 57-62